# FASCICULE DE BREVET EUROPEEN

(11) **EP 1 549 124 B1**
(45) Date de publication et mention de la délivrance du brevet: **04.02.2009**
(21) Numéro de dépôt: 03775476.9
(22) Date de dépôt: 08.10.2003
(51) Int. Cl.: A01B 15/14, A01B 63/14, A01B 59/06

(54) **DISPOSITIF DE CONTROLE POUR ENGIN SEMI-PORTE ET ENGIN SEMI-PORTE, TEL QUE CHARRUE, EQUIPE D'UN TEL DISPOSITIF**
EINSTELLVORRICHTUNG FÜR EIN HALBGETRAGENES GERÄT UND HALBGETRAGENES, MIT DIESER EINSTELLUNG AUSGERÜSTETES, GERÄT, WIE Z.B. EIN PFLUG
CONTROL DEVICE FOR SEMI-MOUNTED MACHINE AND SEMI-MOUNTED MACHINE, SUCH AS PLOUGH EQUIPPED WITH SAME

(30) Priorité: 09.10.2002 FR 0212508
(43) Date de publication de la demande: 06.07.2005
(73) Titulaire: Etablissements Gregoire Besson et Cie, 49230 Montfaucon-sur-Moine (FR)
(72) Inventeur: BESSON, Patrick, F-49230 Montigne sur Moine (FR)
(74) Mandataire: Laget, Jean-Loup
(86) Numéro de dépôt international: PCT/FR2003/002961
(87) Numéro de publication internationale: WO 2004/032601

(56) Documents cités:
- EP-A- 0 019 275
- EP-A- 1 088 474
- BE-A- 505 818
- DE-A- 2 310 360
- US-A- 3 657 831

## Description

La présente invention concerne un dispositif de contrôle des forces passant par la barre de poussée de l'attelage trois points d'un véhicule tracteur auquel est attelé un engin semi-porté, tel qu'une charrue, par l'intermédiaire d'un palonnier et d'une pièce de liaison de type cardan ainsi qu'un engin semi-porté équipé d'un tel dispositif de contrôle.

La plupart des engins semi-portés, en particulier des engins de travail ou de préparation du sol, tels que les charrues, sont reliés au véhicule tracteur par un attelage trois points normalisé. Les standards utilisés par les fabricants de tracteurs sont constitués d'attelage présentant deux bras inférieurs gauche et droit et un bras central supérieur appelé encore barre de poussée ou troisième point de l'attelage. L'ensemble de ces trois bras fait partie intégrante du tracteur. Parallèlement, les outils semi-portés sont équipés de moyens de liaison encore appelés tête d'attelage à cet attelage trois points. Ces moyens de liaison sont généralement constitués d'un palonnier relié aux trois points de l'attelage et d'une pièce de liaison de type cardan interposée entre le palonnier et l'avant de la charrue. Cette pièce de liaison est reliée au palonnier par l'intermédiaire d'une liaison pivot à axe vertical autorisant un déport ou débattement latéral de l'engin de part et d'autre de l'axe de traction du véhicule tracteur. Cette liaison pivot permet en fin de raie un braquage du tracteur, braquage pouvant aller jusqu'à 80° voire plus. En effet, de plus en plus d'agriculteurs exigent une maniabilité accrue de l'ensemble et demandent des angles de braquage supérieurs à 110°. Il en résulte la nécessité d'allonger le palonnier afin de déplacer vers l'arrière l'axe vertical du tracteur pour ne pas générer un choc entre les éléments du tracteur, en particulier les pneumatiques de ce dernier, et la charrue. Parallèlement, il en résulte un éloignement par rapport à l'attelage trois points de la liaison pivot à axe horizontal qui s'étend entre la pièce de liaison et la charrue et qui autorise un déplacement à pivotement autour d'un axe sensiblement horizontal de la charrue permettant à cette dernière de suivre le profil du terrain.

Cet éloignement des liaisons pivots à axe horizontal et vertical de l'attelage trois points provoque non plus une compression mais une traction de la barre de poussée. Cette traction de la barre de poussée engendre un grand nombre d'inconvénients. En effet, cette force de traction engendre un délestage de l'avant du tracteur. Il en résulte une mauvaise adhérence au sol de ce dernier. En outre, une force de traction trop importante dans la barre de poussée empêche les capteurs de contrôle d'effort positionnés sur les bras inférieurs de l'attelage trois points de fournir des informations pertinentes. Ces capteurs, qui ont pour fonction d'assurer le relevage de la charrue, deviennent alors inefficaces. Il en résulte une difficulté à contrôler le comportement de la charrue. Enfin, en position transport de la charrue, on constate une amplification des secousses et du balancement de la charrue.

L'adhérence du tracteur, primordiale en travail du sol, dépend entre autres facteurs de la charge dynamique sur les roues motrices. Jusqu'à présent, des artifices ont été utilisés pour générer une augmentation de cette charge. Ainsi, il est fréquent, dans l'état de la technique, d'alourdir le tracteur à l'aide de masses additionnelles sur le châssis et sur les voiles de roue. On peut utiliser également un gonflage à l'eau des pneumatiques, un jumelage des roues, un montage de chaînes, un emploi de roues squelette ou de roues cages... Toutes ces solutions demeurent toutefois contraignantes et doivent être adaptées à chaque fois d'une part aux caractéristiques de l'engin semi-porté à atteler, d'autre part aux caractéristiques du véhicule tracteur. Parallèlement, il a été développé pour des charrues longues, portées arrière ou portées avant, un dispositif de contrôle électro-hydraulique du report de charge. Cette invention réside dans une modulation de l'effort de poussée en fonction de la charge supportée par la roue permettant d'augmenter l'adhérence du tracteur tout en diminuant l'effort résistant nuisible au niveau de la roue de jauge. Ce dispositif consiste à remplacer la barre de poussée par un vérin double effet dont le fonctionnement est asservi à des capteurs positionnés au voisinage de la roue de jauge et enregistrant au travail les efforts encaissés par cette roue de jauge.

Une telle solution n'est pas transposable à une charrue semi-portée.

Il est par ailleurs connu, à travers le brevet d'invention belge N° 505.818 de proposer des dispositifs d'attelage autorisant le contrôle du déport latéral d'un véhicule tracteur. L'objectif est d'éviter le ripage de véhicule tracteur. A cet effet, le dispositif d'attelage présente une articulation autour d'un axe vertical incliné depuis l'engin porté en direction du tracteur. Toutefois, un tel dispositif ne permet pas d'obtenir un transfert de charge de l'arrière vers l'avant pour agir sur une barre de poussée qui n'est ici pas présente, le dispositif d'attelage étant dépourvu d'attelage trois points.

On connaît par ailleurs, à travers le document allemand DE-A-2.310.360, un dispositif d'attelage entre un véhicule tracteur et l'avant d'une charrue. Le dispositif d'attelage est constitué d'un vérin représenté en 1 aux figures et d'un bras 2 reliés à une première pièce 3. Sur cette première pièce 3 est articulé un levier 15, lui-même relié par l'intermédiaire d'une liaison cardan à l'avant d'une charrue. Des chaînes, représentées en 35 et 38 aux figures, permettent de bloquer l'axe horizontal de cette liaison cardan. Toutefois, la liaison entre la pièce 15 et le bras 3, représenté par une liaison pivot 34, demeure constamment libre. En conséquence, il est impossible de reporter la charge de l'engin sur le vérin 1 constituant l'équivalent d'une barre de poussée d'un dispositif d'attelage même en verrouillant l'articulation représentée en 8 aux figures.

Enfin, le brevet américain US-A-3.657.831 décrit un engin porté encore appelé sous-soleuse. Cette sous-soleuse est reliée au véhicule tracteur par l'intermédiaire d'un dispositif d'attelage constitué de plusieurs vérins. Ce dispositif d'attelage est constitué à partir d'une plaque de montage fixée au tracteur d'une première articulation à axe vertical autorisant un déport latéral de l'engin de la sous-soleuse par l'intermédiaire d'un vérin représenté en 22 aux figures. De cette articulation à axe vertical, prend naissance un parallélogramme déformable constitué de deux bras 32, 31 qui permettent, lors de la déformation du parallélogramme, un relevage de la sous-soleuse par l'intermédiaire d'un vérin 41. Il est prévu, en arrière de ce parallélogramme déformable, une nouvelle articulation à axe vertical autorisant un nouveau départ latéral de la pièce travaillante par l'intermédiaire d'un vérin 52. Enfin, la pièce travaillante est elle-même articulée autour d'un axe horizontal par l'intermédiaire d'un vérin 66 qui permet de régler la profondeur d'enfoncement de la pièce travaillante dans le sol. A aucun moment, à travers ce dispositif d'attelage d'un engin porté et non semi porté, il est possible de reporter la charge de l'engin. Par ailleurs, un dispositif d'attelage trois points qui n'est pas présent dans cette configuration. On constate, par ailleurs, que du fait que l'engin est un engin porté, le vérin 66 et donc les forces qu'il peut transmettre sont constamment des forces de pression ou de compression et ne peuvent à aucun moment être des forces de traction. En conséquence, un report de charge est rendu impossible.

Un but de la présente invention est donc de proposer un dispositif de contrôle des forces passant par la barre de poussée de l'attelage dont la conception permet d'annuler, d'inverser et/ou de moduler les forces passant par la barre de poussée du tracteur, de reporter une partie de la charge de l'engin semi-porté sur l'essieu avant du véhicule tracteur de manière à augmenter l'adhérence de ce dernier sans nuire à sa maniabilité et en particulier à l'angle de braquage et ce, indépendamment des caractéristiques du tracteur.

Un autre but de la présente invention est de proposer un dispositif de contrôle des forces dont la conception permet d'améliorer le comportement de l'engin semi-tracté et d'augmenter l'adhérence du tracteur sans avoir à agir sur les caractéristiques du tracteur, en particulier sans avoir à lester ou modifier les pneumatiques du tracteur.

Un autre but de la présente invention est de proposer un dispositif de contrôle des forces permettant, à faible coût, d'augmenter en position travail les performances du tracteur et de l'engin semi-porté et d'annuler les effets de balancement du tracteur et de l'engin semi-porté lors du transport.

Un autre but de la présente invention est de proposer un engin semi-porté dont les caractéristiques de vitesse d'avancement et de rendement sont améliorées.

A cet effet, l'invention, telle que revendiquée, a pour objet un dispositif de contrôle des forces passant par la barre de poussée de l'attelage trois points d'un véhicule tracteur auquel est attelé un engin semi-porté, tel qu'une charrue, par l'intermédiaire d'un palonnier et d'une pièce de liaison de type cardan interposée entre palonnier et engin semi-porté, cette pièce de liaison autorisant d'une part un déport latéral de l'engin semi-porté par l'intermédiaire d'une liaison pivot à axe vertical entre palonnier et pièce de liaison, d'autre part un déplacement à pivotement autour d'un axe sensiblement horizontal de l'engin par l'intermédiaire d'une liaison pivot à axe dit horizontal entre pièce de liaison et engin, dispositif caractérisé en ce qu'il est constitué d'un organe de contrôle disposé entre pièce de liaison et partie avant de l'engin semi-porté, cet organe étant apte à exercer un effort réglable de poussée ou de traction sur l'engin semi-porté dans le sens d'un pivotement de l'engin autour de l'axe horizontal en direction du sol et provoquant, par réaction de l'engin semi-porté transmise au moins par ledit organe de contrôle à la barre de poussée, l'annulation, l'inversion et/ou la modulation des forces de traction passant par la barre de poussée de l'attelage trois points du véhicule tracteur.

Cette possibilité de contrôler les forces passant par la barre de poussée permet notamment de répartir à volonté la charge de l'engin semi-porté sur l'essieu avant ou arrière du véhicule tracteur.

L'invention, telle que revendiquée, a encore pour objet un engin semi-porté, tel qu'une charrue, du type attelable à la barre de poussée et aux bras d'un attelage trois points d'un véhicule tracteur par l'intermédiaire d'un palonnier et d'une pièce de liaison de type cardan interposée entre palonnier et engin semi-porté, cette pièce de liaison autorisant d'une part un déport latéral de l'engin par l'intermédiaire d'une liaison pivot à axe vertical entre palonnier et pièce de liaison, d'autre part un déplacement à pivotement autour d'un axe horizontal de l'engin par l'intermédiaire d'une liaison pivot à axe horizontal entre pièce de liaison et engin, caractérisé en ce que l'engin semi-porté comporte un dispositif de contrôle des forces passant par la barre de poussée de l'attelage trois points, en vue notamment de reporter une partie de la charge de l'engin semi-porté sur l'essieu avant du véhicule tracteur, ce dispositif étant constitué d'au moins un organe de contrôle disposé entre pièce de liaison et partie avant de l'engin semi-porté, cet organe étant apte à exercer un effort réglable de poussée ou de traction sur l'engin semi-porté dans le sens d'un pivotement de l'engin autour de l'axe horizontal en direction du sol et provoquant, par réaction de l'engin semi-porté transmise au moins par ledit organe de contrôle à la barre de poussée, l'annulation, l'inversion et/ou la modulation des forces de traction passant par la barre de poussée de l'attelage trois points du véhicule tracteur.

L'invention sera bien comprise à la lecture de la description suivante d'exemples de réalisation, en référence aux dessins annexés dans lesquels :
la figure 1 représente une vue de côté d'un ensemble véhicule tracteur et charrue en position attelée de la charrue au véhicule tracteur conforme à l'invention
la figure 2 représente une vue schématique partielle de côté d'un dispositif de contrôle des forces réalisé au moyen d'un vérin ;
la figure 3 représente une vue schématique partielle de côté d'un dispositif de contrôle des forces constitué d'un ressort et
la figure 4 représente une vue schématique partielle de côté d'un dispositif de contrôle des forces constitué essentiellement d'un bloc élastiquement déformable.

Comme mentionné ci-dessus, le dispositif de contrôle des forces, objet de l'invention, permet d'annuler, d'inverser et/ou de moduler les forces de traction passant par la barre de poussée de l'attelage trois points d'un véhicule tracteur.

En effet, comme mentionné ci-dessus, les engins 7 semi-portés, en particulier les engins de travail ou de traitement du sol, tels que les charrues sont généralement attelés au véhicule 1 tracteur par l'intermédiaire d'un attelage 2 trois points du type constitué généralement de deux bras 4 inférieurs gauche et droit et d'un bras central supérieur encore appelé barre 3 de poussée.

Dans le cas d'un engin 7 semi-porté se présentant sous forme d'une charrue, celle-ci est constituée d'au moins une poutre support de corps 18 de charrue portée à une extrémité dite arrière par un chariot 8 et reliée par son autre extrémité dite avant à l'attelage trois points du véhicule tracteur par l'intermédiaire d'un palonnier 5 et d'une pièce 6 de liaison qui seront décrits ci-après.

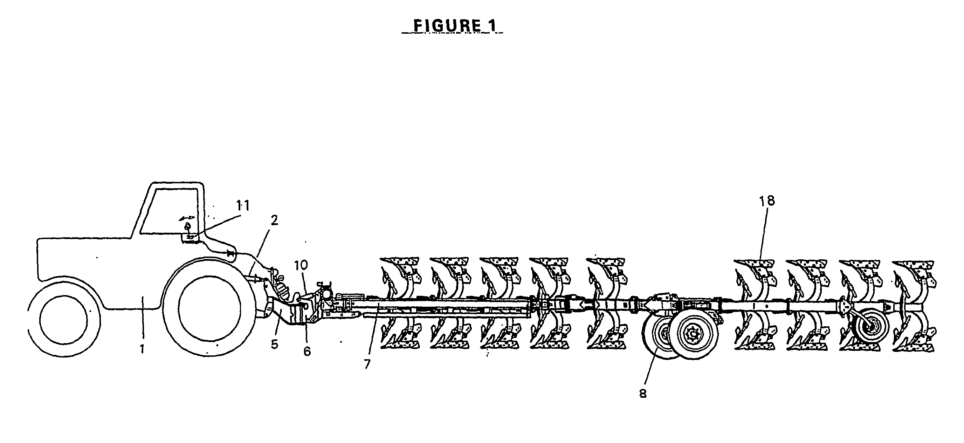

Dans l'exemple représenté à la figure 1, cette charrue comporte deux poutres, l'une avant, l'autre arrière supportées par un chariot 8 central. Ces charrues peuvent être de type réversible ou non.

Comme l'illustrent les figures, lorsqu'une charrue porte un certain nombre de socs, le poids et surtout la position très en arrière du centre de gravité de la charrue modifie la répartition des efforts dans les pièces d'attelage. Par ailleurs, pour augmenter la maniabilité du tracteur et en particulier son rayon de braquage, les charrues semi-portées, qui sont reliées à l'attelage trois points du tracteur par un palonnier 5 et une pièce 6 de liaison de type cardan interposée entre le palonnier 5 et l'engin 7 semi-porté, présentent, au niveau des articulations équipant la pièce 6 de liaison, des articulations de plus en plus éloignées de l'attelage 2 trois points. Ainsi, dans l'exemple représenté, la pièce 6 de liaison est reliée au palonnier 5 par l'intermédiaire d'une liaison 12 pivot à axe D1 vertical. Cette liaison 12 pivot à axe D1 vertical permet, en fin de raie, au tracteur d'amorcer un virage tandis que la charrue reste en ligne avec la raie. La liaison 13 pivot à axe horizontal entre pièce 6 de liaison et engin 7 permet quant à elle un déplacement de l'engin à pivotement autour d'un axe D2 sensiblement horizontal en vue de permettre à ce dernier de suivre le profil du terrain.

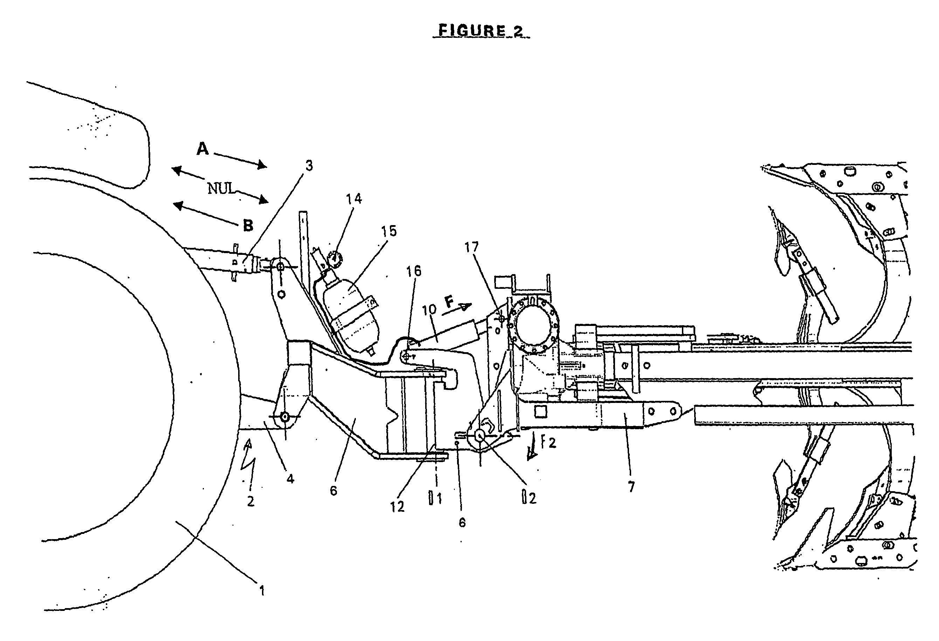

Dans un ensemble véhicule tracteur/charrue classique, le positionnement des liaisons 12, 13 pivot et la charge de la charrue provoquent non plus une compression mais une traction de la barre 3 de poussée. Cette force de traction, représentée en A à la figure 2, génère un délestage du train avant du tracteur et induit alors une mauvaise adhérence de ce dernier au sol.

Le but du dispositif de contrôle, objet de l'invention, est donc de contrôler cette force passant par la barre 3 de poussée de l'attelage 2 trois points du véhicule 1 tracteur en vue notamment d'assurer un report d'une partie de la charge de l'engin semi-porté sur l'essieu avant du véhicule tracteur.

De manière caractéristique à l'invention, ce dispositif de contrôle est constitué d'un organe 10, 10A, 10B de contrôle disposé entre la pièce 6 de liaison et la partie avant de l'engin 7 semi-porté. Cet organe 10, 10A, 10B exerce un effort de poussée ou respectivement de traction sur l'engin semi-porté sollicitant la liaison 13 pivot à axe D2 dit horizontal dans le sens d'un pivotement de l'engin autour de l'axe D2 horizontal en direction du sol. Cet effort de poussée ou de traction provoque, par réaction de l'engin 7 semi-porté transmise au moins par ledit organe 10, 10A, 10B de contrôle à la barre 3 de poussée, l'annulation, l'inversion et/ou la modulation des forces de traction passant par la barre 3 de poussée de l'attelage 2 trois points du véhicule 1 tracteur. Les figures 2 à 4 illustrent différents modes de réalisation de cet organe de contrôle.

Dans tous les cas, l'organe 10, 10A, 10B de contrôle est articulé à la pièce 6 de liaison d'une part et à la partie avant de l'engin 7 semi porté d'autre part par une liaison pivot représentée en 16, 17 aux figures. Cette liaison pivot est à axe sensiblement horizontal. Comme mentionné ci-dessus, l'organe de contrôle exerce un effort de poussée sur l'engin semi-porté lorsqu'il est positionné au-dessus de l'articulation de la liaison 13 pivot à axe D2 dit horizontal entre pièce 6 de liaison et engin 7 alors qu'il exerce un effort de traction lorsqu'il est positionné au-dessous de cette dernière. Dans tous les cas, l'organe de contrôle exerce un effort apte à solliciter la liaison 13 pivot à axe D2 horizontal dans le sens d'un pivotement de l'engin autour de l'axe D2 horizontal en direction du sol comme l'illustre la flèche F2 à la figure 2. Dans tous les exemples représentés, cet organe de contrôle est positionné au-dessus de la liaison 13 pivot. Cette solution est préférée d'une part essentiellement pour des raisons d'encombrement de l'ensemble, d'autre part pour éviter un endommagement de l'organe de contrôle notamment lors de projections de terre issues du travail du sol.

Dans l'exemple représenté à la figure 2, l'organe 10 de contrôle est constitué d'un vérin, de préférence simple effet, alimenté en un fluide stocké dans un accumulateur 15 indépendant couplé au vérin 10 et positionné de préférence sur le palonnier 5. Cet accumulateur 15 est équipé d'un manomètre 14 permettant au conducteur du véhicule tracteur de disposer d'un élément de contrôle de la pression régnant à l'intérieur du vérin. Cette pression peut par ailleurs être modulée lors de l'avancement du tracteur au moyen d'une liaison par flexible hydraulique entre véhicule tracteur et accumulateur 15. Cette pression est commandable à partir de la cabine du tracteur au moyen d'un organe de commande 11. Ainsi, l'accumulateur est constitué de deux chambres séparées par une membrane flexible. L'une des chambres est remplie d'un gaz combustible (azote). Cette chambre est hermétique. L'autre côté de l'accumulateur est relié d'une part au vérin hydraulique du dispositif de contrôle et d'autre part à une sortie d'un distributeur hydraulique du tracteur commandé en fonctionnement par l'organe 11. En injectant de l'huile hydraulique par le distributeur du tracteur, la pression du circuit augmente et le volume du gaz compressible diminue. Par le fait même, l'effort de poussée du vérin de contrôle augmente. A l'inverse, lors d'un retrait de l'huile hydraulique du circuit, il y a une expansion du gaz compressible, ce qui diminue la pression hydraulique du circuit et donc diminue ou annule la poussée du vérin de contrôle. Lors des manoeuvres, au travail ou en transport, l'avant de la charrue est articulé et peut pivoter autour de l'axe horizontal du cardan. Les variations de pression engendrées sont alors compensées par le gaz compressible qui se dilate ou se rétracte automatiquement dans sa chambre sans intervention de l'opérateur sur le distributeur hydraulique du tracteur.

L'objectif est de faire exercer au vérin, tel que positionné dans la figure 2, un effort de poussée F variable éventuellement nul en fonction des forces souhaitées au niveau de la barre 3 de poussée de l'attelage 2. Ainsi, dans le cas d'un effort de pression égal à zéro ou nul, la barre 3 de poussée de l'attelage 2 trois points est soumise à une force représentée en A à la figure 2, c'est-à-dire à une force de traction qui engendre les inconvénients mentionnés ci-dessus. Lorsque l'effort de poussée augmente, il peut atteindre une valeur qui tend à annuler l'effort de traction passant par la barre 3 de poussée. La barre 3 de poussée devient alors inutile. Dans ce cas, la totalité des forces engendrées par l'engin semi-porté passe par les bras 4 inférieurs de l'attelage trois points du tracteur. Ceci est un avantage dans le cas d'un attelage trois points où les capteurs de contrôle des forces sont disposés exclusivement sur les bras inférieurs. Lorsque l'effort F de poussée est supérieur à la force de traction passant par la barre 3 de poussée, il en résulte alors une force de compression dans la barre de traction conforme à celle représentée en B dans la figure 2. Cette force de compression permet de reporter en marche la charge de la charrue sur l'essieu avant du tracteur. Ainsi, un tel dispositif de contrôle vient compléter les dispositifs tendant à augmenter l'adhérence du tracteur connus à ce jour tels que le lestage du tracteur, le montage pneumatique ou autre. On voit aisément, en fonction de l'effort de poussée retenue pour le vérin, qu'il est ainsi possible d'annuler, d'inverser ou de moduler en marche, c'est-à-dire en position travail ou transport de l'engin 7 semi-porté, les forces passant par la barre de poussée du tracteur. Lorsqu'on aboutit à une solution où la force de traction a été annulée, voire inversée dans la barre 3 de poussée, il en résulte un grand nombre d'avantages. On peut ainsi, pour un même tracteur, augmenter le poids de l'engin semi-porté ou augmenter sa vitesse d'avancement. On obtient une meilleure performance du tracteur et de la charrue ainsi qu'une augmentation du rendement horaire. On obtient un contrôle d'effort du tracteur efficace même lors des entrées et sorties de champs, une meilleure adhérence de ce dernier, même en condition difficile, une limitation du nombre des masses d'alourdissement nécessaires sur le tracteur, une amélioration de la direction du tracteur lors du labour puisque le tracteur reste aligné dans la raie, une diminution de la consommation de carburant par hectare travaillé et une annulation des effets de balancement du tracteur et de la charrue lors du transport. Ainsi, la sécurité et le confort sont accrus lors des déplacements.

Tous ces avantages peuvent être obtenus par la présence d'un simple organe de contrôle entre pièce de liaison et engin semi-porté.

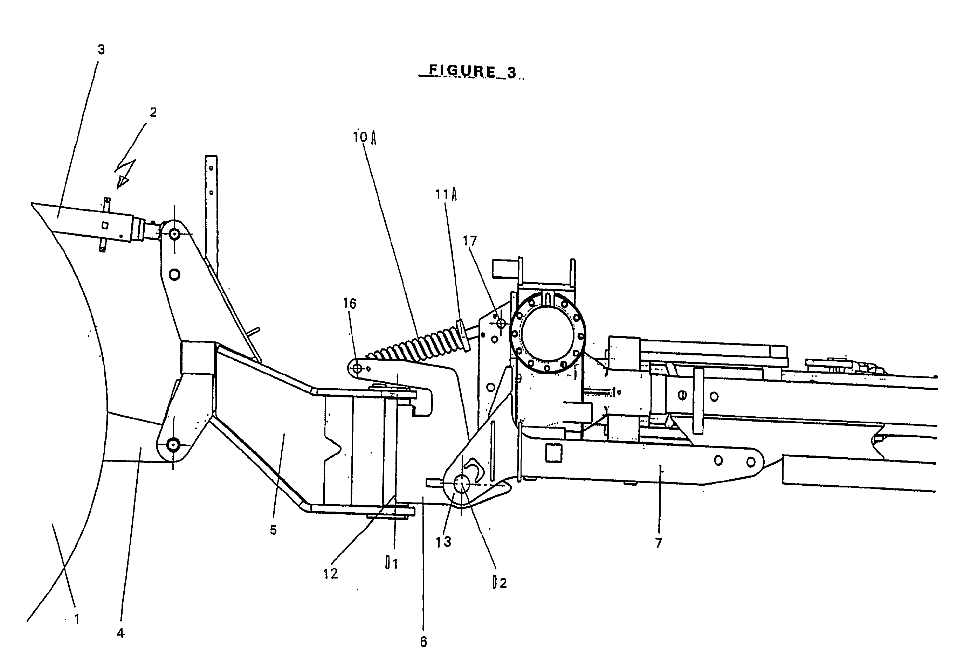

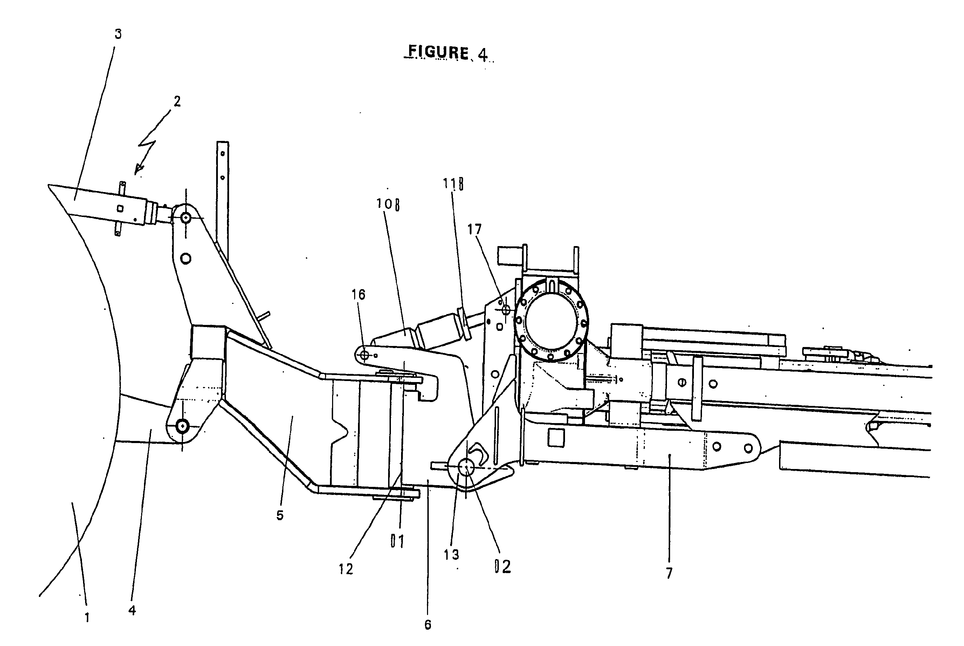

Dans un autre mode de réalisation de l'invention conforme aux figures 3 et 4, l'organe 10A, 10B de contrôle est un organe élastiquement déformable. Dans l'exemple représenté à la figure 4, l'organe de contrôle est constituée d'un bloc de matériau élastiquement déformable précontraint positionné au-dessus de la liaison 13 pivot. La précontrainte est appliquée au moyen d'un organe 11 B réglable, tel qu'une butée réglable.

Dans un autre mode de réalisation représenté à la figure 3, l'organe de contrôle est un ressort 10A de compression ou de traction repositionnable et/ou équipé d'un organe 11A de réglage de la pression de tarage du ressort. Dans l'exemple représenté, cet organe de contrôle est un ressort 10A de compression positionné au-dessus de la liaison 13 pivot à axe D2 horizontal entre pièce 6 de liaison et engin 7 semi-porté. Un écrou porté par une tige filetée constitue l'organe 11A de réglage de la pression de tarage du ressort. Ainsi, dans l'ensemble des exemples représentés aux figures 2 à 4, l'organe de contrôle comporte des moyens de réglage de l'effort appliqué sur l'engin 7 semi-porté par ledit organe. Ces moyens de réglage peuvent être actionnables au cours de l'avancement du véhicule 1 tracteur comme l'illustre en particulier la figure 2. L'engin 7 semi-porté, équipé d'une tête d'attelage constituée du palonnier 5 et de la pièce 6 de liaison et comportant un tel dispositif de contrôle, peut notamment être constitué par une charrue ou par tout autre engin semi-porté, en particulier un châssis roulant portant des outils à dents, des disques ou similaires.

## Revendications

1. Dispositif de contrôle des forces passant par la barre (3) de poussée de l'attelage trois points d'un véhicule (1) tracteur auquel est attelé un engin (7) semi-porté, tel qu'une charrue, permettant d'annuler, d'inverser et/ou de moduler les forces de traction passant par la barre (3) de poussée de l'attelage (2) trois points du véhicule (1) tracteur afin d'assurer un report d'une partie de la charge de l'engin semi-porté sur l'essieu avant du tracteur, ledit engin semi-porté étant attelé audit tracteur par l'intermédiaire d'un palonnier (5) et d'une pièce (6) de liaison de type cardan interposée entre ledit palonnier (5) et l'engin (7) semi-porté, ladite pièce (6) de liaison autorisant d'une part un déport latéral de l'engin semi-porté par l'intermédiaire d'une liaison (12) pivot à axe (D1) vertical entre palonnier (5) et pièce (6) de liaison, d'autre part un déplacement à pivotement autour d'un axe (D2) sensiblement horizontal de l'engin (7) par l'intermédiaire d'une liaison (13) pivot à axe (D2) dit horizontal entre la pièce (6) de liaison et l'engin (7), ladite liaison (13) à axe (D2) horizontal étant agencée pour permettre à l'engin de suivre le profil du terrain par pivotement autour dudit axe (D2),
dispositif **caractérisé en ce qu'**il est constitué d'un organe (10, 10A, 10B) de contrôle disposé entre la pièce (6) de liaison et la partie avant de l'engin (7) semi-porté, cet organe (10, 10A, 10B) exerçant un effort réglable de poussée ou de traction sur l'engin semi-porté dans le sens d'un pivotement en direction du sol de l'engin autour de l'axe (D2) horizontal, provoquant, par réaction de l'engin (7) semi-porté transmise au moins par ledit organe (10, 10A, 10B) de contrôle à la barre (3) de poussée, l'annulation, l'inversion et/ou la modulation des forces de traction passant par la barre (3) de poussée de l'attelage (2) trois points du véhicule (1) tracteur, et adapté à répartir à volonté la charge de l'engin semi-porté sur l'essieu avant ou arrière du véhicule tracteur.

2. Dispositif de contrôle selon la revendication 1,
**caractérisé en ce que** l'organe (10, 10A, 10B) de contrôle est articulé à la pièce (6) de liaison d'une part et à la partie avant de l'engin (7) semi porté d'autre part par une liaison (16, 17) pivot.

3. Dispositif de contrôle selon la revendication 1 ou la revendication 2, **caractérisé en ce que** l'organe de contrôle est positionné au-dessus de l'articulation de la liaison (13) pivot à axe (D2) horizontal et exerce un effort de poussée sur la partie avant de l'engin (7).

4. Dispositif de contrôle selon la revendication 1 ou la revendication 2, **caractérisé en ce que** l'organe de contrôle est positionné au-dessous de l'articulation de la liaison (13) pivot à axe (D2) horizontal et exerce un effort de traction sur la partie avant de l'engin (7).

5. Dispositif de contrôle selon l'une des revendications 1 à 3,
**caractérisé en ce que** les moyens (11) de réglage sont actionnables au cours de l'avancement du véhicule tracteur.

6. Dispositif de contrôle selon l'une des revendications 1 à 5,
**caractérisé en ce que** l'organe (10) de contrôle est constitué d'un vérin, de préférence simple effet, alimenté en un fluide stocké dans un accumulateur (15) indépendant couplé au vérin (10) et positionné de préférence sur le palonnier (5).

7. Dispositif de contrôle selon l'une des revendications 1 à 4,
**caractérisé en ce que** l'organe (10A, 10B) de contrôle est un organe élastiquement déformable précontraint et dont la précontrainte est appliquée sur ledit organe (10) de contrôle au moyen d'un organe (11B) réglable tel qu'une butée réglable.

8. Dispositif de contrôle selon la revendication 7,
**caractérisé en ce que** l'organe de contrôle est constituée d'un bloc (10B) de matériau élastiquement déformable précontraint de manière ajustable.

9. Dispositif de contrôle selon l'une des revendications 1 à 4,
**caractérisé en ce que** l'organe de contrôle est un ressort (10A) de compression ou de traction repositionnable et/ou équipé d'un organe (11A) de réglage de la pression de tarage du ressort.

10. Dispositif de contrôle selon les revendication 3 et 9,
**caractérisé en ce que** l'organe de contrôle est un ressort (10A) de compression positionné entre pièce (6) de liaison et engin (7) semi-porté, au-dessus de la liaison (13) pivot à axe (D2) horizontal.

11. Engin (7) semi-porté, tel qu'une charrue, du type attelable à la barre (3) deoussée et aux bras (4) d'un attelage (2) trois points d'un véhicule (1) tracteur par l'intermédiaire d'un palonnier (5) et d'une pièce (6) de liaison de type cardan interposée entre palonnier (5) et engin (7) semi-porté, cette pièce (6) de liaison autorisant d'une part un déport latéral de l'engin (7) par l'intermédiaire d'une liaison (12) pivot à axe (D1) vertical entre palonnier (5) et pièce (6) de liaison, d'autre part un déplacement à pivotement autour d'un axe (D2) horizontal de l'engin (7) par l'intermédiaire d'une liaison (13) pivot à axe horizontal entre pièce (6) de liaison et engin (7),
**caractérisé en ce que** ledit engin (7) comporte un dispositif, selon la revendication 1, de contrôle des forces passant par la barre (3) de poussée de l'attelage (2) trois points, en vue notamment de reporter une partie de la charge de l'engin (7) semi-porté sur l'essieu avant du véhicule (1) tracteur, ce dispositif étant constitué d'au moins un organe (10, 10A, 10B) de contrôle disposé entre pièce (6) de liaison et partie avant de l'engin (7) semi-porté, cet organe (10, 10A, 10B) étant apte à exercer un effort réglable de poussée ou de traction sur l'engin semi-porté dans le sens d'un pivotement de l'engin autour de l'axe (D2) horizontal en direction du sol et provoquant, par réaction de l'engin (7) semi-porté transmise au moins par ledit organe (10, 10A, 10B) de contrôle à la barre (3) de poussée, l'annulation, l'inversion et/ou la modulation des forces de traction passant par la barre (3) de poussée de l'attelage (2) trois points du véhicule (1) tracteur.

12. Engin (7) semi-porté selon la revendication 11,
**caractérisé en ce que** l'organe (10, 10A, 10B) de contrôle est conforme à l'une quelconques des revendications 2 à 10.

13. Engin (7) semi-porté selon l'une des revendications 11 et 12,
**caractérisé en ce qu'**il se présente sous forme d'une charrue constituée d'au moins une poutre support de corps (18) de charrue portée à une extrémité dite arrière par un chariot (8) et reliée par son autre extrémité dite avant à la pièce (6) de liaison.

## Claims

1. Device for controlling forces passing through the push bar (3) of the three-point hitch of a tractive vehicle
(1) to which a semi-mounted machine (7), such as a plough, is hitched, making it possible for the tensile forces passing through the push bar (3) of the three-point hitch (2) of the tractive vehicle (1) to be cancelled, reversed and/or modulated, in order to ensure the transfer of part of the load of the semi-mounted machine onto the front axle of the tractor, said semi-mounted machine being hitched to said tractor by means of an equalizing yoke (5) and a gimbal-type linking component (6), interposed between said equalizing yoke (5) and the semi-mounted machine (7), said linking component (6) permitting, on the one hand, a lateral offset of the semi-mounted machine by means of a pivot link (12) with a vertical axis (D1) between the equalizing yoke (5) and the linking component (6) and, on the other hand, a pivoting displacement about a substantially horizontal axis (D2) of the machine (7) by means of a pivot link (13) with a so-called horizontal axis (D2) between the linking component (6) and the machine (7), said link (13) with a horizontal axis (D2) being arranged to allow the machine to follow the profile of the ground by pivoting about said axis (D2),
device **characterised in that** it consists of a control member (10, 10A, 10B) arranged between the linking component (6) and the front part of the semi-mounted machine (7), said member (10, 10A, 10B) exerting an adjustable thrust force or tensile force on the semi-mounted machine in the direction of the pivoting of the machine about the horizontal axis (D2) towards the ground and causing, by the reaction of the semi-mounted machine (7) transmitted at least by said control member (10, 10A, 10B) to the push bar (3), the tensile forces passing through the push bar (3) of the three-point hitch (2) of the tractive vehicle (1) to be cancelled, reversed and/or modulated, and capable of distributing the load of the semi-mounted machine onto the front or rear axle of the tractive vehicle, as required.

2. Control device according to Claim 1,
**characterised in that** the control member (10, 10A, 10B) is articulated to the linking component (6), on the one hand, and to the front part of the semi-mounted machine (7), on the other hand, by a pivot link (16, 17).

3. Control device according to Claim 1 or Claim 2,
**characterised in that** the control member is positioned above the articulation of the pivot link (13) with a horizontal axis (D2) and exerts a thrust force on the front part of the machine (7).

4. Control device according to Claim 1 or Claim 2,
**characterised in that** the control member is positioned below the articulation of the pivot link (13) with a horizontal axis (D2) and exerts a tensile force on the front part of the machine (7).

5. Control device according to one of Claims 1 to 3,
**characterised in that** the adjusting means (11) may be actuated during the forward movement of the tractive vehicle.

6. Control device according to one of Claims 1 to 5,
**characterised in that** the control member (10) consists of a hydraulic cylinder, preferably a single-action hydraulic cylinder, supplied with a fluid stored in a separate accumulator (15), coupled to the hydraulic cylinder (10) and preferably positioned on the equalizing yoke (5).

7. Control device according to one of Claims 1 to 4,
**characterised in that** the control member (10A, 10B) is a resiliently deformable pre-stressed member and the pre-stressing thereof is applied to said control member (10) by means of an adjustable member (11B) such as an adjustable stop.

8. Control device according to Claim 7,
**characterised in that** the control member consists of a block (10B) of resiliently deformable material pre-stressed in an adjustable manner.

9. Control device according to one of Claims 1 to 4,
**characterised in that** the control member is a compression spring or tension spring (10A) which may be repositioned and/or provided with a member (11A) for adjusting the setting pressure of the spring.

10. Control device according to Claims 3 and 9,
**characterised in that** the control member is a compression spring (10A) positioned between the linking component (6) and the semi-mounted machine (7), above the pivot link (13) with a horizontal axis (D2).

11. Semi-mounted machine (7) such as a plough, of the type able to be hitched to the push bar (3) and to the arms (4) of a three-point hitch (2) of a tractive vehicle (1) by means of an equalizing yoke (5) and a gimbal-type linking component (6) interposed between the equalizing yoke (5) and the semi-mounted machine (7), said linking component (6) permitting, on the one hand, a lateral offset of the machine (7) by means of a pivot link (12) with a vertical axis (D1) between the equalizing yoke (5) and the linking component (6), and, on the other hand, a pivoting displacement about a horizontal axis (D2) of the machine (7) by means of a pivot link (13) with a horizontal axis between the linking component (6) and the machine (7),
**characterised in that** said machine (7) comprises a device, according to Claim 1, for controlling forces passing through the push bar (3) of the three-point hitch (2), for distributing, in particular, a part of the load of the semi-mounted machine (7) onto the front axle of the tractive vehicle (1), said device consisting of at least one control member (10, 10A, 10B) arranged between the linking component (6) and the front part of the semi-mounted machine (7), said member (10, 10A, 10B) being capable of exerting an adjustable thrust force or tensile force on the semi-mounted machine in the direction of the pivoting of the machine about the horizontal axis (D2) towards the ground and causing, by the reaction of the semi-mounted machine (7) transmitted at least by said control member (10, 10A, 10B) to the push bar (3), the tensile forces passing through the push bar (3) of the three-point hitch (2) of the tractive vehicle (1) to be cancelled, reversed and/or modulated.

12. Semi-mounted machine (7) according to Claim 11,
**characterised in that** the control member (10, 10A, 10B) is in accordance with any one of Claims 2 to 10.

13. Semi-mounted machine (7) according to one of Claims 11 and 12,
**characterised in that** it is in the form of a plough consisting of at least one beam for supporting the body (18) of the plough carried at one end, known as the rear end, by a carriage (8) and connected at its other end, known as the front end, to the linking component (6).

## Patentansprüche

1. Vorrichtung zur Regelung der Kräfte, die durch den Oberlenker (3) der Dreipunktanhängung einer Zugmaschine (1) verlaufen, an die ein Aufsattelgerät (7), wie zum Beispiel ein Pflug angehängt ist, die es ermöglicht, die Zugkräfte, die durch den Oberlenker (3) der Dreipunktanhängung der Zugmaschine (1) verlaufen (1), aufzuheben, umzukehren und/oder zu modulieren, um eine Verlagerung eines Teiles der Last des Aufsattelgerätes auf die Vorderachse der Zugmaschine sicherzustellen, wobei das Aufsattelgerät über einen Hebel (5) und ein kardanartiges Verbindungsstück (6), das zwischen dem Hebel (5) und dem Aufsattelgerät (7) angeordnet ist, an der Zugmaschine angehängt ist, wobei das Verbindungsstück (6) einerseits über eine Drehzapfenverbindung (12) mit vertikaler Achse (D1) zwischen Hebel (5) und Verbindungsstück (6) einen Seitenversatz des Aufsattelgerätes, andererseits über eine Drehzapfenverbindung (13) mit horizontaler Achse (D2) zwischen dem Verbindungsstück (6) und dem Gerät (7) eine Drehbewegung um eine im Wesentlichen horizontale Achse (D2) des Gerätes (7) erlaubt, wobei die Verbindung (13) mit horizontaler Achse (D2) ausgebildet ist, um dem Gerät zu ermöglichen, dem Bodenprofil durch Drehung um die Achse (D2) zu folgen, **dadurch gekennzeichnet, dass** sie ein Regelungsglied (10, 10A, 10B) umfasst, das zwischen dem Verbindungsstück (6) und dem vorderen Teil des Aufsattelgerätes (7) angeordnet ist, wobei das Glied (10, 10A, 10B) bei einer Drehung des Gerätes um die horizontale Achse (D2) in Richtung des Bodens eine einstellbare Druck- oder Zugkraft auf das Aufsattelgerät ausübt und durch Reaktion des Aufsattelgerätes (7), die mindestens von dem Regelungsglied (10, 10A, 10B) auf den Oberlenker (3) übertragen wird, die Aufhebung, Umkehr und/oder Modulation der Zugkräfte, die durch den Oberlenker (3) der Dreipunktanhängung (2) der Zugmaschine (1) verlaufen, hervorruft, und ausgebildet ist, um die Last des Aufsattelgerätes beliebig auf die Vorderachse oder Hinterachse der Zugmaschine zu verteilen.

2. Regelungsvorrichtung nach Anspruch 1, **dadurch gekennzeichnet, dass** das Regelungsglied (10, 10A, 10B) über eine Drehzapfenverbindung (16, 17) einerseits mit dem Verbindungsstück (6) und andererseits mit dem vorderen Teil des Aufsattelgerätes (7) gelenkig verbunden ist.

3. Regelungsvorrichtung nach Anspruch 1 oder Anspruch 2,
**dadurch gekennzeichnet, dass** das Regelungsglied über dem Gelenk der Drehzapfenverbindung (13) mit horizontaler Achse (D2) angeordnet ist und eine Druckkraft auf den vorderen Teil des Gerätes (7) ausübt.

4. Regelungsvorrichtung nach Anspruch 1 oder Anspruch 2,
**dadurch gekennzeichnet, dass** das Regelungsglied unter dem Gelenk der Drehzapfenverbindung (13) mit horizontaler Achse (D2) angeordnet ist und eine Zugkraft auf den vorderen Teil des Gerätes (7) ausübt.

5. Regelungsvorrichtung nach einem der Ansprüche 1 bis 3, **dadurch gekennzeichnet, dass** die Regelungsmittel (11) während der Vorwärtsbewegung der Zugmaschine betätigbar sind.

6. Regelungsvorrichtung nach einem der Ansprüche 1 bis 5, **dadurch gekennzeichnet, dass** das Regelungsglied (10) einen vorzugsweise einfach wirkenden Zylinder umfasst, der mit einem Fluid versorgt wird, das in einem unabhängigen Vorratsbehälter (15) gespeichert ist, der mit dem Zylinder (10) verbunden und vorzugsweise an dem Hebel (5) angeordnet ist.

7. Regelungsvorrichtung nach einem der Ansprüche 1 bis 4, **dadurch gekennzeichnet, dass** das Regelungsglied (10A, 10B) ein vorgespanntes, elastisch verformbares Glied ist, bei dem die Vorspannung mit einem verstellbaren Mittel (11B), wie zum Beispiel einem verstellbaren Anschlag, auf das Regelungsglied (10) aufgebracht wird.

8. Regelungsvorrichtung nach Anspruch 7, **dadurch gekennzeichnet, dass** das Regelungsglied einen Block (10B) aus einem verstellbar vorgespannten, elastisch verformbaren Werkstoff umfasst.

9. Regelungsvorrichtung nach einem der Ansprüche 1 bis 4, **dadurch gekennzeichnet, dass** das Regelungsglied eine Druck- oder Zugfeder (10A) ist, die nachstellbar und/oder mit einem Mittel (11 A) zum Verstellen des Einstelldruckes der Feder ausgerüstet ist.

10. Regelungsvorrichtung nach den Ansprüchen 3 und 9, **dadurch gekennzeichnet, dass** das Regelungsglied eine Druckfeder (10A) ist, die zwischen Verbindungsstück (6) und Aufsattelgerät (7) über der Drehzapfenverbindung (13) mit horizontaler Achse (D2) angeordnet ist.

11. Aufsattelgerät (7), wie zum Beispiel ein Pflug, das über einen Hebel (5) und ein kardanartiges Verbindungsstück (6), das zwischen Hebel (5) und Aufsattelgerät (7) angeordnet ist, an den Oberlenker (3) und die Unterlenker (4) einer Dreipunktanhängung (2) einer Zugmaschine (1) anhängbar ist, wobei das Verbindungsstück (6) einerseits über eine Drehzapfenverbindung (12) mit vertikaler Achse (D1) zwischen Hebel (5) und Verbindungsstück (6) einen Seitenversatz des Gerätes (7), andererseits über eine Drehzapfenverbindung (13) mit horizontaler Achse (D2) zwischen Verbindungsstück (6) und Gerät (7) eine Drehbewegung um eine horizontale Achse (D2) des Gerätes (7) erlaubt, **dadurch gekennzeichnet, dass** das Gerät (7) eine Vorrichtung, nach Anspruch 1, zur Regelung der Kräfte umfasst, die durch den Oberlenker (3) der Dreipunktanhängung verlaufen, insbesondere, um einen Teil der Last des Aufsattelgerätes (7) auf die Vorderachse der Zugmaschine (1) zu verlagern, wobei die Vorrichtung mindestens ein Regelungsglied (10, 10A, 10B) umfasst, das zwischen Verbindungsstück (6) und vorderem Teil des Aufsattelgerätes (7) angeordnet ist, wobei das Glied (10, 10A, 10B) bei einer Drehung des Gerätes um die horizontale Achse (D2) in Richtung des Bodens eine einstellbare Druck- oder Zugkraft auf das Aufsattelgerät ausübt und durch Reaktion des Aufsattelgerätes (7), die mindestens von dem Regelungsglied (10, 10A, 10B) auf den Oberlenker (3) übertragen wird, die Aufhebung, Umkehr und/oder Modulation der Zugkräfte, die durch den Oberlenker (3) der Dreipunktanhängung (2) der Zugmaschine (1) verlaufen, hervorruft.

12. Aufsattelgerät (7) nach Anspruch 11, **dadurch gekennzeichnet, dass** das Regelungsglied (10, 10A, 10B) einem der Ansprüche 2 bis 10 entspricht.

13. Aufsattelgerät (7) nach einem der Ansprüche 11 und 12, **dadurch gekennzeichnet, dass** es in Form eines Pfluges vorliegt, der mindestens einen Pflugkörperträger (18) umfasst, der an einem hinteren Ende von einem Wagen (8) getragen wird und mit seinem anderen, dem vorderen, Ende mit dem Verbindungsstück (6) verbunden ist.
